(19) Europäisches Patentamt
European Patent Office
Office européen des brevets

(11) **EP 1 227 305 B1**

(12) **EUROPÄISCHE PATENTSCHRIFT**

(45) Veröffentlichungstag und Bekanntmachung des Hinweises auf die Patenterteilung:
**28.02.2007  Patentblatt 2007/09**

(51) Int Cl.:
*G01F 15/04* *(2006.01)*          *G01N 25/18* *(2006.01)*
*G01F 1/696* *(2006.01)*          *G01F 5/00* *(2006.01)*

(21) Anmeldenummer: **01810093.3**

(22) Anmeldetag: **30.01.2001**

(54) **Gaszähler**

Gas meter

Compteur à gaz

(84) Benannte Vertragsstaaten:
**AT BE CH CY DE DK ES FI FR GB GR IE IT LI LU MC NL PT SE TR**

(43) Veröffentlichungstag der Anmeldung:
**31.07.2002  Patentblatt 2002/31**

(73) Patentinhaber: **EMS-PATENT AG**
**7013 Domat/Ems (CH)**

(72) Erfinder:
• **Matter, Daniel**
  **5200 Brugg (CH)**
• **Prêtre, Philippe**
  **5405 Baden-Dättwil (CH)**

• **Luchsinger, Rolf**
  **5416 Kirchdorf (CH)**

(74) Vertreter: **Reitzle, Helmut**
**Pfenning, Meinig & Partner GbR**
**Patent- und Rechtsanwälte**
**Theresienhöhe 13**
**80339 München (DE)**

(56) Entgegenhaltungen:
**EP-A- 0 348 245          EP-A- 0 373 965**
**WO-A-99/34175          WO-A-99/34201**
**WO-A-99/34221**

EP 1 227 305 B1

**Beschreibung**

**Technisches Gebiet**

Die Erfindung betrifft ein Verfahren zur Bestimmung eines Gasgemisch-Verbrauchs und einen Gaszähler gemäss dem Oberbegriff des Patentanspruches 1 beziehungsweise 6.

**Stand der Technik**

Die heutige Verrechnung eines Gasverbrauchs basiert im allgemeinen auf dem bezogenen Gasvolumen. Bekannte Gaszähler, beispielsweise die weit verbreiteten Balgengaszähler, beruhen deshalb auf einer Volumenmessung.

Bei Mischgasen, insbesondere bei Erdgas, führt dies jedoch zu einer unfairen Kostenabrechnung, da der Verbrauch wesentlich von der Qualität des Mischgases, das heisst vom Mischungsverhältnis der einzelnen Gase abhängt.

Aus WO 99/06800 ist deshalb ein Verfahren zur Bestimmung eines Gasverbrauchs bekannt, bei welchem eine Durchflussrate der Gasmoleküle bestimmt wird. Hierzu ist in einem gasdurchströmten Rohr ein erster und ein zweiter Thermistor angeordnet, wobei das Abkühlverhalten des ersten Thermistors beobachtet wird, mittels des zweiten Thermistors die aktuelle Temperatur des Gases gemessen wird und aus diesen Messwerten die Durchflussrate bestimmt wird. Um die eruierte Durchflussrate wiederum in einen Volumenwert umrechnen zu können, ist im Rohr ferner eine Messzelle angeordnet, in welcher das Abkühlverhalten von ruhendem Gas gemessen wird.

In PCT/CH00/00101 wird vorgeschlagen, ein Anemometer in einem Gaszähler einzusetzen, dessen Signal proportional zu einem Massenfluss ist. Das Anemometer weist hierfür ein Heizelement und in Strömungsrichtung beabstandet dazu angeordnete Temperatursensorelemente auf. Im Betrieb wird Gas, welches über das Anemometer strömt, vom Heizelement erwärmt. Die Temperatursensorelemente messen die Temperatur des Gases vor und nach der Erwärmung, so dass sich daraus der Massenfluss bestimmen lässt.

Ein für die Bestimmung des Massenflusses geeignetes Anemometer ist beispielsweise in F. Mayer et al., Single-Chip CHMOS Anemometer, Proc. IEEE, International Electron Devices Meeting (IEDM, 1997), S. 895-898, in J. Robadey et al., Two dimensional integrated gas flow sensors by CMOS IC technology, J. Micromech. Microeng. 5 (1995), S. 243-250 und in F. Mayer et al., Scaling of thermal CMOS gas flow microsensors: experiment and simulation, Proc. IEEE Micro Electro Mechanical Systems, (IEEE, 1996), S. 116-121 beschrieben. Diese Anemometer sind CMOS Anemometer mit einer Polysilizium-Struktur im Sandwich-Aufbau.

Der in der noch unveröffentlichten Europäischen Patentanmeldung Nr. 00810511.6 beschriebene Gaszähler verwendet dasselbe Messprinzip wie oben beschrieben. Bei gleichem Massenfluss variiert der gemessene Wert des Massenflusses jedoch mit der Zusammensetzung des Gasgemisches, wobei Gase mit einem höheren spezifischen Heizenergiewert nicht notwendigerweise auch ein im gleichen Mass höheres Massenflusssignal liefern. Deshalb wurde der Gaszähler als Energiemessgerät geeicht, wobei der gemessene Energiewert für ein definiertes Standardgasgemisch kalibriert ist. Der entsprechende Kalibrationsfaktor berücksichtigt dabei den Heizwert des Gasgemisches und wird von einer externen Einheit bestimmt. Eine inhärente Korrektur für Variationen innerhalb des Gasgemisches fällt jedoch nicht hundertprozentig korrekt aus, weil die spezifischen Heizwerte der verschiedenen brennbaren Gaskomponenten eines Erdgases nicht gleich variieren wie die entsprechenden Sensorsignale des Energiemessgerätes. Zudem lassen sich sich ändernde Anteile von nichtbrennbaren Gaskomponenten nicht korrigieren.

In EP-A-0'373'965 ist ein Durchflussmessgerät beschrieben, welches ein Mikro-Anemometer mit einer Wheatstone Brücke zur Bestimmung des Massenflusses einsetzt. Ein zweites, gleich aufgebautes Mikro-Anemometer wird verwendet, um in einem Bypass bei annähernd ruhendem Gas die thermische Leitfähigkeit und die spezifische Wärmekapazität des Gases zu bestimmen. Mit Hilfe dieser zwei gemessenen physikalischen Grössen wird der gemessene Massenfluss korrigiert, wobei ein empirisch gefundener Umrechnungsfaktor eingesetzt wird.

Zur Bestimmung der thermischen Leitfähigkeit und der spezifischen Wärmekapazität wird in EP'965 ein Verfahren eingesetzt, wie es in EP-A-0'348'245 offenbart ist. Das ruhende Gas, in welchem das zweite Mikro-Anemometer angeordnet ist, wird mittels eines Heizelementes erwärmt bis ein stationärer Zustand erreicht ist. Dabei wird die Zeitspanne gemessen, welche der Sensor braucht, um von einem ersten vorbestimmten Temperaturwert zu einem zweiten vorbestimmten Temperaturwert zu gelangen. Anhand dieser gemessenen Zeitspanne wird der spezifische Widerstand gemessen. Das erhaltene Ausgangssignal der Wheatstone-Brücke ergibt eine Spannungsdifferenz, welche proportional zu der durch die Sensoren absorbierten Energie ist und deshalb ein Mass für die thermische Leitfähigkeit ist.

Ferner ist aus EP-A-0'348'244 bekannt, mittels der in EP'245 gemessenen Grössen die spezifische Dichte des Gases zu bestimmen, wobei hierfür empirisch gefundene Korrekturwerte verwendet werden.

Diese Korrektur des Massenflusses ist relativ aufwendig, da drei verschiedene physikalische Werte bestimmt und miteinander verrechnet werden müssen. Zudem basieren ihre Relationen auf empirischen Werten, so dass es fraglich ist, ob die Korrektur tatsächlich bei allen Mischungsverhältnissen einsetzbar ist. Ferner können die zwei Anemometer unterschiedlichen Signaldrifts unterliegen, so dass eine entsprechende Kompensation vorgesehen sein muss.

## Darstellung der Erfindung

Es ist deshalb Aufgabe der Erfindung, ein Verfahren zur Bestimmung eines Gasverbrauchs und einen Gaszähler zu schaffen, welche eine einfache aber möglichst genaue Bestimmung des Gasverbrauchs gewährleisten.

Diese Aufgabe löst ein Verfahren und ein Gaszähler mit den Merkmalen des Patentspruches 1 beziehungsweise 6.

Erfindungsgemäss wird an einem mindestens annähernd ruhenden Gas seine Diffusivität bestimmt und diese in einem Korrekturwert für einen am strömenden Gas bestimmten Massenfluss beziehungsweise Energieverbrauch verwendet. Dabei wird die Diffusivität bestimmt, indem das Gas mittels eines Heizelementes erwärmt, die Temperaturänderung an einem beabstandet zum Heizelement angeordneten Temperatursensorelement detektiert und die Zeitspanne gemessen wird, bis das Temperatursensorelement eine maximale Temperatur detektiert. Diese Zeitspanne ist umgekehrt proportional zur Diffusivität, wobei der Proportionalitätsfaktor im wesentlichen vom Abstand des Heizelementes zum Temperatursensorelement im Quadrat abhängt.

Dies hat den Vorteil, dass lediglich eine einzige Messung notwendig ist, um einen Korrekturwert zu erhalten, welcher sowohl die spezifische Wärmekapazität, die thermische Leitfähigkeit wie auch die Dichte des Gases oder Gasgemisches berücksichtigt.

Vorzugsweise wird für die Messung der Diffusivität der bereits im Gaszähler vorhandene Sensor zur Bestimmung des Massenfluss oder Energieverbrauches verwendet, wobei die Messung der Diffusivität bei nicht vorhandenem Gasbezug, also im stationären Zustand, erfolgt. Dies hat den Vorteil, dass einerseits die Kosten für einen zweiten Sensor und seine Auswerteelektronik entfallen und andererseits allfällige bei Verwendung von zwei Sensoren entstehende Messfehler vermieden werden. Es kann somit ein relativ kostengünstiger, aber genauer Gaszähler geschaffen werden, welcher insbesondere auch im Haushalt und Kleingewerbebereich einsetzbar ist.

In einer bevorzugten Ausführungsform ist der Gaszähler als Energiemessgerät geeicht, wobei der vom Gaszähler bestimmte Energiewert einerseits mit einem von einer externen Einheit bestimmten Heizwert kalibriert wie auch mit der mittels des Gaszählers bestimmten Diffusivität als Korrekturwert korrigiert wird.

Weitere vorteilhafte Varianten des Verfahrens und vorteilhafte Ausführungsformen gehen aus den abhängigen Patentansprüchen hervor.

## Kurze Beschreibung der Zeichnungen

Im folgenden wird der Erfindungsgegenstand anhand von bevorzugten Ausführungsbeispielen, welche in den beiliegenden Zeichnungen dargestellt sind, näher erläutert. Es zeigen:

Figur 1     einen Ausschnitt aus einer Gasleitung mit einem Massenfluss-Sensor;

Figur 2     einen Vergleich einer Abweichung von Monatsmittelwerten von Heizwerten von Erdgas und entsprechende Messwertänderungen eines Massenfluss-Sensors;

Figur 3     eine schematische Darstellung eines Massenfluss-Sensors;

Figur 4a     eine mittels des Massenfluss-Sensors gemäss Figur 3 gemessene Temperatur in Abhängigkeit der Zeit für ein Gasgemisch mit einer hohen thermischen Leitfähigkeit und einer tiefen spezifischen Wärmekapazität und

Figur 4b     für ein Gasgemisch mit einer tiefen thermischen Leitfähigkeit und einer hohen spezifischen Wärmekapazität.

## Wege zur Ausführung der Erfindung

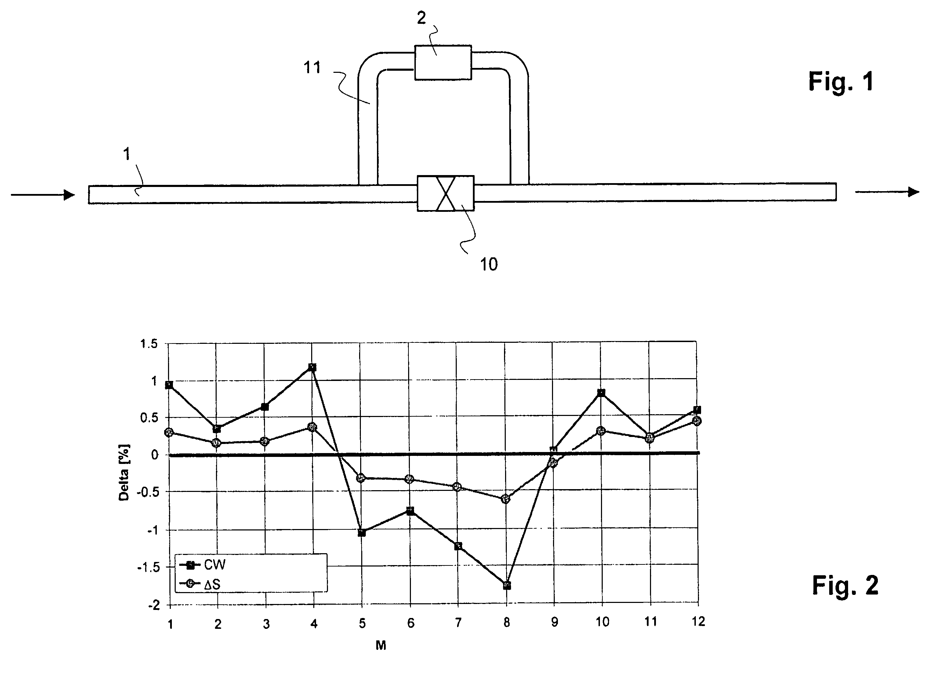

In Figur 1 ist eine Gasleitung dargestellt, welche mit einem Gaszähler versehen ist. Die Gasleitung besteht aus einem Hauptleitungsrohr 1, welches mit einer gebäudeexternen, hier nicht dargestellten Gasnetzleitung verbunden ist. Dieses Hauptleitungsrohr 1 weist eine Rohrverengung 10 mit einem definierten Querschnitt auf. Durch die Gasleitung strömt normalerweise ein Gasgemisch, dessen aktuelle Zusammensetzung sich zeitlich ändern kann. Dies ist beispielsweise bei Erdgas der Fall, dessen drei Hauptbestandteile Methan, Propan und Ethan je nach Ursprung des Gases eine andere Gewichtung aufweisen. Diese drei brennbaren Hauptbestandteile weisen unterschiedliche Heizwerte auf, so dass der Heizwert des resultierenden Gasgemisches entsprechend schwankt.

Erfindungsgemäss weist der Gaszähler einen Massenfluss-Sensor zur Bestimmung eines Massenflusses beziehungsweise eines Energiebezuges und einen Korrektur-Sensor zur Bestimmung eines Korrekturwertes auf, sowie deren hier nicht dargestellte Steuer- und Auswertelektronik. Vorzugsweise sind der Massenfluss-Sensor wie auch der Korrektursensor identisch aufgebaut, wobei sie vorzugsweise durch denselben Sensor 2 gebildet werden.

Der Massenfluss-Sensor 2 wie auch der Korrektursensor sind in einer einfachen Ausführungsform direkt im Hauptleitungsrohr 1 angeordnet. In einer anderen, einfachen Ausführungsform ist der Massenfluss-Sensor 2 im Hauptleitungsrohr und der Korrektursensor in einem Bypassrohr 11 angeordnet, welches einen Bypass zur Rohrverengung 10 bildet. In der hier dargestellten bevorzugten Ausführungsform ist der Massenfluss-Sensor 2 und der Korrektursensor im Bypassrohr 11 angeordnet und wie bereits erwähnt durch denselben Sensor 2 gebildet.

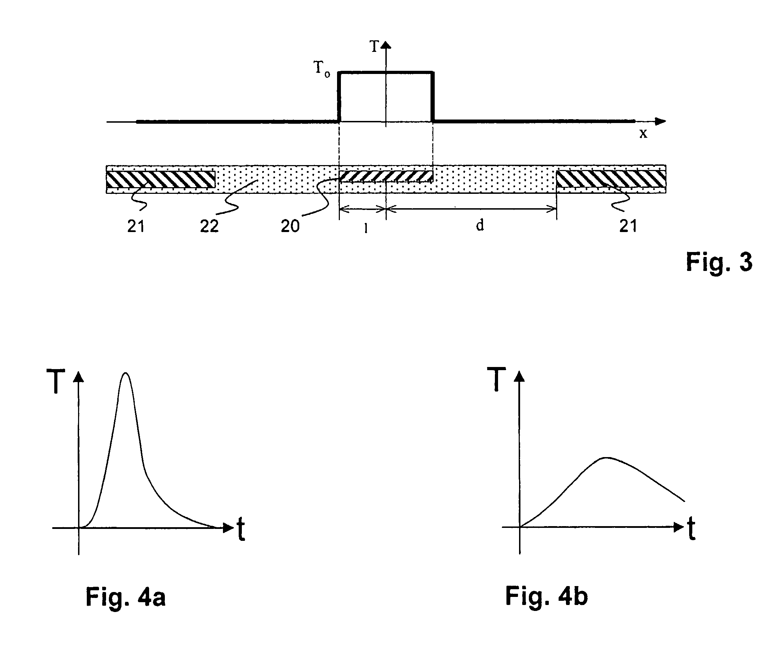

Der Sensor 2 weist, wie in Figur 3 dargestellt, ein Heizelement 20 zur Erwärmung des Gasgemisches und mindestens ein beabstandet zum Heizelement angeordnetes Temperatursensorelement 21 zur Bestimmung der Temperatur des Gasgemisches auf. Vorzugsweise sind zwei Temperatursensorelemente 21 vorhanden, wobei ein erstes Temperatursensorelement in Strömungsrichtung vor dem Heizelement 20 und ein zweites Temperatursensorelement in Strömungsrichtung nach dem Heizelement 20 angeordnet ist. Vorzugsweise sind die Temperatursensorelemente 21 und das Heizelement 20 in einer gemeinsamen Halterung 22 gehalten, welche vom Gas um- oder überströmt wird. Gute Resultate wurden mit einem Anemometer erzielt, insbesondere einem CMOS-Anemometer mit einer Polysilizium-Struktur im Sandwich-Aufbau wie es in den eingangs zitierten Publikationen beschrieben ist.

Die Steuer- und Auswerteelektronik besteht aus bekannten Mitteln, um im Heizelement Heizpulse zu generieren und die Signale der Temperatursensorelemente auszuwerten. Insbesondere verfügt die Steuer- und Auswerteelektronik über Mittel zur Erfassung von Zeitspannen und Mittel zur Bestimmung einer maximal gemessenen Temperatur.

Ein zu messendes Gas oder Gasgemisch strömt über die Oberfläche des Massenfluss-Sensors 2 und wird vom Heizelement 20 erwärmt. Mittels der Temperatursensoren 21 wird in Strömungsrichtung vor und nach dem Heizelement 20 die Temperatur beziehungsweise die Temperaturdifferenz $\Delta T$ des Gases gemessen, wobei ein Sensorsignal in Form eines Spannungssignals U erhalten wird, welches sich proportional zur Temperaturdifferenz $\Delta T$ verhält. Die Wärmeübertragungsrate ist von der Anzahl Moleküle pro Volumeneinheit und somit von der Gasmasse abhängig.

Das Sensorsignal hängt zudem vom Heizwert, von der thermischen Leitfähigkeit, der spezifischen Wärmekapazität und der Dichte des Gases ab, also allgemein von dessen Art beziehungsweise Zusammensetzung. In Figur 2 ist diese Abhängigkeit dargestellt, wobei einerseits eine Änderung $\Delta S$ des Sensorsignalwertes von einem Normwert in monatlichen Abständen m dargestellt ist. Zudem ist in einer zweiten Kurve, welche mit CW bezeichnet ist, eine prozentuale Abweichung der Monatsmittelwerte des Heizwertes von Erdgas vom Jahresmittelwert während eines Jahres wiedergegeben. Wie ersichtlich ist, schwankt das Sensorsignal ähnlich, jedoch nicht deckungsgleich wie die Heizwerte.

Um die Genauigkeit der Messung des Gasverbrauchs zu verbessern, wird nun erfindungsgemäss ein Korrekturwert hinzugefügt, welcher die Diffusivität $\alpha$ des Gases beinhaltet. Die Diffusivität $\alpha$ ist definiert als $\alpha = \kappa/c_p\rho$, wobei $\kappa$ die thermische Leitfähigkeit, $c_p$ die spezifische Wärmekapazität und $\rho$ die Dichte des Gases sind. Erfindungsgemäss lässt sich die Diffusivität durch den Korrektur-Sensor im mindestens annähernd ruhenden Gas bestimmen. Vorzugsweise wird diese Messung nach einem Gasbezug durchgeführt, sobald der Massenfluss-Sensor keinen Durchfluss mehr detektiert. Das Heizelement 20 des Sensors 2 wird elektrisch gepulst, vorzugsweise pro Messung ein einziges Mal. Die Pulsbreite beträgt vorzugsweise 1 bis 10 ms. Das über oder in dem Sensor anliegende ruhende Gas wird erwärmt. Mittels der Temperatursensorelemente wird der zeitliche Verlauf der Temperatur des Gases bestimmt. Dabei ergeben Gase oder Gasgemische mit einer hohen Wärmeleitfähigkeit $\kappa$ und einer kleinen Wärmekapazität $c_p$ eher schmale zeitliche Temperaturverläufe und Gase mit einer kleinen Wärmeleitfähigkeit $\kappa$ und einer grossen Wärmekapazität $c_p$ eher breite Temperaturverläufe, wie dies in den Figuren 4a beziehungsweise 4b dargestellt ist.

Der Zusammenhang zwischen Temperaturverlauf und Diffusivität ergibt sich unter Berücksichtigung von Figur 3 wie folgt:

Der Temperaturverlauf folgt der Gleichung

$$\frac{\partial}{\partial t} T(x,t) = \alpha \cdot \frac{\partial^2}{\partial x^2} T(x,t) \tag{1}$$

mit den Anfangsbedingungen

$$\begin{aligned} T(x,0) &= T_0, & |x| \leq l, \\ T(x,0) &= 0, & \text{sonst} \end{aligned} \tag{2}$$

Daraus ergibt sich gemäss H. Schilling, Wärme und Energie, VEB Fachbuchverlag Leipzig, S. 280 (1984)

$$T(x,t) = \frac{T_0}{2} \cdot \left[ \phi\left(\frac{l-x}{\sqrt{2 \cdot \alpha \cdot t}}\right) + \phi\left(\frac{l+x}{\sqrt{2 \cdot \alpha \cdot t}}\right) \right], \qquad (3)$$

mit der Normalverteilungsfunktion

$$\phi(y) = \frac{\sqrt{2}}{\sqrt{\pi}} \cdot \int_0^y \exp\left(-\frac{x^2}{2}\right) dx . \qquad (4).$$

Die Zeit $t_{max}$, nach welcher beim Temperatursensorelement eine maximale Temperatur detektiert wird, ergibt sich somit aus Gleichung (3) und (4) als:

$$t_{max} = \frac{l \cdot d}{\alpha \cdot \log\left(\frac{d+l}{d-l}\right)} \qquad (5)$$

mit

l der halben Länge des Heizelementes und
d dem Abstand von der Mitte des Heizelementes zum heizelementseitigen Ende des Temperatursensorelementes.

Demzufolge ist $t_{max}$ proportional zu $1/\alpha$, jedoch unabhängig von der Art oder Zusammensetzung des Gases. Da für den Sensor gilt, dass d >> l, ergibt sich in guter Näherung

$$\alpha = \frac{d^2}{2 \cdot t_{max}} \qquad (6).$$

Zur Bestimmung des Korrekturwertes f* wird deshalb erfindungsgemäss der zeitliche Verlauf des erzeugten Wärmepulses beobachtet, wobei insbesondere die Zeitspanne $t_{max}$ gemessen wird, welche nach dem Puls des Heizelementes 20 bis zur Detektion der Maximaltemperatur durch das Temperatursensorelement 21 vergeht. Daraus wird die Diffusivität $\alpha$ berechnet und der Korrekturwert f* bestimmt als das Verhältnis $\alpha/\alpha_{cal}$, wobei $\alpha_{cal}$ die Diffusivität eines Standardgasgemisches darstellt, mit welchem beispielsweise eine Heizwertkalibrierung vorgenommen wurde.

Sind zwei Temperatursensorelemente vorhanden, so wird ein gemittelter Wert der zwei Messungen zur Berechnung der Diffusivität verwendet. Typischerweise liegt der Korrekturfaktor f* zwischen 0.97 und 1.03.

Der erfindungsgemäss bestimmte Korrekturwert lässt sich nun zur Korrektur des gemessenen Massenflusses einsetzen. Ist jedoch der Gaszähler, wie in der noch unveröffentlichten Europäischen Patentanmeldung Nr. 00810511.6 beschrieben, als Energiemessgerät geeicht, so lässt sich dieser Korrekturwert mit dem gemessenen Energiebezug verrechnen, wie nachstehend erläutert wird:

Ein als Energiemessgerät geeichter Gaszähler erhält einen momentan gemessenen Energiebezugswert von

$$P = P(S) = F_n(S(\dot{V}_{N_2,n})) \cdot f_{N_2-CH} \cdot H_n \qquad (7)$$

Der gesamte Energiebezug ergibt sich aus

$$E = \int P(S) \cdot dt = f_{N_2-CH} \cdot H_n \cdot \int F_n(S(\dot{V}_{N_2,n})) \cdot dt \qquad (8)$$

und, falls Mittelwerte über einen Zeitraum, beispielsweise einen Monat, gebildet werden,

$$E = f_{N_2-CH} \cdot \sum_{i=1}^{m} (\overline{H}_n(i) \cdot \int_i F_n(S(\dot{V}_{N_2,n})) \cdot dt) \qquad (9)$$

und, wenn zusätzlich die den Mittelwerten des Gasgemisches entsprechenden Energie-Umrechnungsfaktoren bestimmt werden

$$E = \sum_{i=1}^{m} (\overline{f}_{N_2-CH}(i) \cdot \overline{H}_n(i) \cdot \int_i F_n(S(\dot{V}_{N_2,n})) \cdot dt) \qquad (10).$$

Dabei ist

$\dot{V}_n$ : Normvolumenfluss [$l_n$ / min]
P : momemtaner Gasverbrauch [W]
E : Gesamt - Gasenergie [kWh]
$F_n(S(\dot{V}_{N_2,n}))$ : Sensoreichkurve für ein Eichgas, beispielsweise Stickstoff (Normbedingung)
$f_{N_2-CH}$ : Signal - Umrechnungsfaktor (Stickstoff - Erdgas)
$H_n$ : Erdgas - Brennwert (Normbedingungen)
$\overline{f}_{N_2-CH}(i)$, $\overline{H}_n(i)$: Mittelwerte der Zeitperiode (i)
$S(V_{n,N_2})$: Sensorsignal für Stickstoff (Normbedingungen)
$\int F_n(S) \cdot dt$ : Unkorrigierter Gasverbrauch der Periode (i)

Erfindungsgemäss wird nun zusätzlich der Korrekturwert f* für die Diffusivität $\alpha$ mitberücksichtigt.

$$E = \int P(S) \cdot dt = f_{N_2-CH} \cdot H_n \cdot \int f * \cdot F_n(S(\dot{V}_{N_2,n})) \cdot dt \qquad (11)$$

Die Formeln (9) und (10) sind entsprechend anzuwenden.
Mittels der erfindungsgemässen Bestimmung der Diffusivität ist es somit möglich, Gaszähler, welche auf einer Messung des Massenflusses beziehungsweise des Energiebezuges beruhen, auf einfache Art und Weise zu verbessern, so dass auch kurzzeitige Schwankungen in der Zusammensetzung des Gasgemisches berücksichtigt werden können.

**Bezugszeichenliste**

1     Hauptleitungsrohr
10    Rohrverengung
11    Bypassrohr
2     Sensor zur Bestimmung eines Massenflusses
20    Heizelement
21    Temperatursensorelement
22    Halterung
CW   Abweichung der Monatsmittelwerte
$\Delta$S    Änderung des Sensorsignalwerts

M     Monat
T     Temperatur
$T_0$     Anfangstemperatur
t     Zeit
l     halbe Länge des Heizelementes
d     Abstand des Heizelementes vom Temperatursensorelement


**Patentansprüche**

1.  Verfahren zur Bestimmung eines Gasverbrauches, indem ein Massenfluss oder Energiebezug bestimmt wird und der Massenfluss oder Energiebezug mit einem Korrekturwert f* versehen wird, welcher eine spezifische Wärmekapazität, eine thermische Leitfähigkeit und eine Dichte des Gases berücksichtigt, wobei der Korrekturwert f* durch Messung am mindestens annähernd ruhenden Gas bestimmt wird, indem ein Heizelement (20) das Gas erwärmt und die Erwärmung des Gases mit einem beabstandet zum Heizelement (20) angeordnetem Temperatursensorelement (21) beobachtet wird, wobei eine Zeitspanne $t_{max}$ gemessen wird, welche zwischen der Erwärmung des Gases durch das Heizelement (20) und der Detektion einer maximalen Temperatur durch das Temperatursensorelement (21) vergeht,
    **dadurch gekennzeichnet,**
    **dass** aus dieser gemessenen Zeitspanne $t_{max}$ lediglich eine Diffusivität $\alpha$ berechnet und daraus der Korrekturwert f* als das Verhältnis $\alpha/\alpha_{cal}$, wobei $\alpha_{cal}$ die Diffusivität eines Standardgasgemisches darstellt, bestimmt wird.

2.  Verfahren nach Anspruch 1, **dadurch gekennzeichnet, dass** die Diffusivität $\alpha$ anhand der Gleichung

$$\alpha = \frac{d^2}{2 \cdot t_{max}}$$

    berechnet wird, wobei d der Abstand des Heizelementes (20) vom Temperatursensorelement (21) ist.

3.  Verfahren nach Anspruch 1, **dadurch gekennzeichnet, dass** zur Bestimmung des Korrekturwertes f* derselbe Sensor (2) verwendet wird wie zur Bestimmung des Massenflusses oder Energiebezuges, wobei die Bestimmung des Korrekturwertes bei nicht vorhandenem Gasbezug durchgeführt wird.

4.  Verfahren nach einem der Ansprüche 1 oder 3, **dadurch gekennzeichnet, dass** zur Bestimmung des Korrekturwertes f* die Temperatur an mindestens zwei örtlich getrennten Stellen gemessen wird und ein gemittelter Wert der zwei Messungen zur Berechnung der Diffusivität $\alpha$ verwendet wird.

5.  Verfahren nach einem der Ansprüche 1 oder 3, **dadurch gekennzeichnet, dass** zur Bestimmung des Korrekturwertes f* und zur Bestimmung des Massenflusses oder Energiebezuges ein CMOS-Anemometer verwendet wird.

6.  Gaszähler zur Bestimmung eines Gasverbrauchs mit einem Massenflusssensor zur Bestimmung eines Massenflusses oder Energiebezugs und einem Korrektursensor (2) zur Bestimmung eines Korrekturwertes f* zwecks Korrektur des gemessenen Massenflusses oder Energiebezugs, wobei der Korrekturwert f* eine spezifische Wärmekapazität, eine thermische Leitfähigkeit und eine Dichte des Gasgemischs berücksichtigt und wobei der Korrektursensor (2) ein Heizelement (20) zur Erwärmung des Gasgemisches und mindestens ein beabstandet zum Heizelement (20) angeordnetem Temperatursensorelement (21) zur Bestimmung der Temperatur des Gasgemisches aufweist, sowie Mittel vorhanden sind zur Detektion einer Zeitspanne $t_{max}$, welche zwischen der Erwärmung des Gases durch das Heizelement (20) und der Detektion einer maximalen Temperatur durch das Temperatursensorelement (21) vergeht,
    **dadurch gekennzeichnet,**
    **dass** Mittel vorhanden sind, um mittels dieser gemessenen Zeitspanne $t_{max}$ lediglich die Diffusivität $\alpha$ des Gasgemisches zu berechnen und den Korrekturwert f* als das Verhältnis $\alpha/\alpha_{cal}$, wobei $\alpha_{cal}$ die Diffusivität eines Standardgasgemisches darstellt, zu bestimmen.

7.  Gaszähler nach Anspruch 6, **dadurch gekennzeichnet, dass** der Korrektur-Sensor (2) der Massenfluss-Sensor ist.

**8.** Gaszähler nach einem der Ansprüche 6 oder 7, **dadurch gekennzeichnet, dass** der Korrektur-Sensor (2) in einem Bypass (11) zu einer Gasleitung (1) angeordnet ist.

**9.** Gaszähler nach einem der Ansprüche 6 oder 7, **dadurch gekennzeichnet, dass** der Korrektur-Sensor (2) zwei Temperatursensorelemente (21) aufweist, wobei ein erstes Temperatursensorelement beabstandet in Strömungsrichtung vor dem Heizelement (20) und ein zweites Temperatursensorelement beabstandet in Strömungsrichtung nach dem Heizelement (20) angeordnet ist, und dass Mittel vorhanden sind zur Bildung eines gemittelten Wertes der Sensorsignale der zwei Temperatursensorelemente (21).

**10.** Gaszähler nach Anspruch 6, **dadurch gekennzeichnet, dass** er als Energiemessgerät geeicht ist, wobei seine Eichung auf einem Standardgas basiert und ein gemessener Wert mit einem Heizwert-Kalibrationsfaktor versehbar ist, welcher mindestens annähernd den Heizwert eines bezogenen Gases beinhaltet.

**Claims**

**1.** Method for detecting a gas consumption, whereby a mass flow or energy consumption is detected and a correction value f* applied to the mass flow or energy consumption, which allows for a specific heat capacity, a thermal conductivity, and a density of the gas, whereby the correction value f* is determined by means of measuring the at least almost stationary gas in that a heater element (20) heats the gas, and the heating of the gas is monitored by means of a temperature sensor element (21) located at a distance from the heater element (20), whereby a time period $t_{max}$ is measured, the same elapsing between the heating of the gas by means of the heater element (20) and the detection of a maximum temperature by means of the temperature sensor element (21), **characterised in that** only a diffusivity $\alpha$ is calculated from this measured time period $t_{max}$ and the correction value f* is calculated from this as the ratio $\alpha/\alpha_{cal}$, whereby $\alpha_{cal}$ represents the diffusivity of a standard gas mixture.

**2.** Method according to Claim 1, **characterised in that** the diffusivity $\alpha$ is calculated with the aid of the equation

$$\alpha = \frac{d^2}{2 \cdot t_{max}}$$

whereby d represents the distance of the heater element (20) from the temperature sensor element (21).

**3.** Method according to Claim 1, **characterised in that** the same sensor (2) is used for detecting the correction value f* as is used for detecting the mass flow or energy consumption, whereby the detection of the correction value is carried out when no gas consumption occurs.

**4.** Method according to one of the Claims 1 or 3, **characterised in that** the temperature for detecting the correction value f* is measured in at least spatially separated locations, and an averaged value of the two measurements used for calculating the diffusivity $\alpha$.

**5.** Method according to one of the Claims 1 or 3, **characterised in that** a CMOS anemometer is used for detecting the correction value f* and for detecting the mass flow or energy consumption.

**6.** Gas meter for detecting a gas consumption, with a mass flow sensor for detecting a mass flow or energy consumption and a correction sensor (2) for detecting a correction value f* for correcting the measured mass flow or energy consumption, whereby the correction value f* allows for a specific heat capacity, a thermal conductivity, and a density of the gas mixture, and whereby the correction sensor (2) comprises a heater element (20) for heating the gas mixture and at least one temperature sensor element (21) located separately from the heater element (20) for detecting the temperature of the gas mixture. Means are also provided for detecting a time period $t_{max}$, which elapses between the heating of the gas by means of the heater element (20) and the detection of a maximum temperature by means of the temperature sensor element (22), **characterised in that** means are provided only for calculating the diffusivity a of the gas mixture with the aid of this measured time span $t_{max}$ and the correction value f* as the ratio $\alpha/\alpha_{cal}$, whereby $\alpha_{cal}$ represents the diffusivity of a standard gas mixture.

7. Gas meter according to Claim 6, **characterised in that** the correction sensor (2) is the mass flow sensor.

8. Gas meter according to one of the Claims 6 or 7, **characterised in that** the correction sensor (2) is located in a by-pass (11) of a gas pipe (1).

9. Gas meter according to one of the Claims 6 or 7, **characterised in that** the correction sensor (2) comprises two temperature sensor elements (21), whereby a first temperature sensor element is located separately upstream of the heater element (20) in flow direction, and a second temperature sensor element located separately downstream of the heater element (20) in flow direction, and **in that** means are provided for calculating an averaged value of the sensor signals from the two temperature sensor elements (21).

10. Gas meter according to Claim 6, **characterised in that** the same is calibrated in the way of an energy measuring device, whereby said calibration is based on a standard gas, and a heat value calibration factor is applied to a measured value, which comprises at least approximately the heat value of a consumed gas.

## Revendications

1. Procédé de détermination d'une consommation de gaz, dans lequel le débit massique ou l'approvisionnement en énergie est déterminé, et le débit massique ou l'approvisionnement en énergie est doté d'une valeur correctrice f*, qui prend en compte une capacité calorifique spécifique, une conductivité thermique et une densité du gaz, la valeur correctrice f* étant déterminée par des mesures effectuées sur au moins un gaz quasiment au repos, en ce qu'un élément chauffant (20) réchauffe le gaz, et le réchauffement du gaz est surveillé avec un élément capteur de température (21) disposé à une certaine distance de l'élément chauffant (20), moyennant quoi un laps de temps $t_{max}$ est mesuré, lequel s'écoule entre le réchauffement du gaz par l'élément chauffant (20) et la détection d'une température maximale par l'élément capteur de température (21),
**caractérisé en ce que**, à partir de ce laps de temps mesuré $t_{max}$, on calcule uniquement une diffusivité $\alpha$ et, à partir de cela, la valeur correctrice f* est déterminée en tant que rapport $\alpha/\alpha_{cal}$, où $\alpha_{cal}$ représente la diffusivité d'un mélange gazeux standard.

2. Procédé selon la revendication 1, **caractérisé en ce que** la diffusivité $\alpha$ est calculée à l'aide de l'équation

$$\alpha = \frac{d^2}{2 \cdot t_{max}}$$

où d représente la distance entre l'élément chauffant (20) et l'élément capteur de température (21).

3. Procédé selon la revendication 1, **caractérisé en ce que**, pour déterminer la valeur correctrice f*, on utilise le même capteur (2) que pour déterminer le débit massique ou l'approvisionnement en énergie, la détermination de la valeur correctrice étant réalisée pour un approvisionnement en gaz non disponible.

4. Procédé selon l'une quelconque des revendications 1 ou 3, **caractérisé en ce que**, pour déterminer la valeur correctrice f*, on mesure la température au niveau d'au moins deux emplacements séparés dans l'espace, et on utilise une valeur moyenne des deux mesures afin de calculer la diffusivité $\alpha$.

5. Procédé selon l'une quelconque des revendications 1 ou 3, **caractérisé en ce que**, pour déterminer la valeur correctrice f* et pour déterminer le débit massique ou l'approvisionnement en énergie, on utilise un anémomètre CMOS.

6. Compteur à gaz pour déterminer une consommation de gaz avec un capteur de débit massique permettant de déterminer un débit massique ou approvisionnement en énergie et un capteur de correction (2) permettant de déterminer une valeur correctrice f* afin de corriger le débit massique ou approvisionnement en énergie mesuré, dans lequel la valeur correctrice f* prend en compte une capacité calorifique spécifique, une conductivité thermique et une densité du mélange gazeux, et dans lequel le capteur de correction (2) présente un élément chauffant (20) permettant de chauffer le mélange gazeux et au moins un élément capteur de température (21) disposé à une certaine distance de l'élément chauffant (20), permettant de déterminer la température du mélange gazeux, et dans lequel des moyens existent afin de détecter un laps de temps $t_{max}$, qui s'écoule entre le réchauffement du gaz par l'élément chauffant (20) et la détection d'une température maximale au travers de l'élément capteur de température (21),

**caractérisé en ce que** des moyens existent afin de calculer, à l'aide de ce laps de temps mesuré $t_{max}$, uniquement la diffusivité $\alpha$ du mélange gazeux et de déterminer la valeur correctrice f* en tant que rapport $\alpha/\alpha_{cal}$, où $\alpha_{cal}$ représente la diffusivité d'un mélange gazeux standard.

**7.** Compteur à gaz selon la revendication 6, **caractérisé en ce que** le capteur de correction (2) est le capteur de débit massique.

**8.** Compteur à gaz selon l'une quelconque des revendications 6 ou 7, **caractérisé en ce que** le capteur de correction (2) est disposé dans une dérivation (11) menant à une conduite de gaz (1).

**9.** Compteur à gaz selon l'une quelconque des revendications 6 ou 7, **caractérisé en ce que** le capteur de correction (2) présente deux éléments capteurs de température (21), un premier élément capteur de température étant disposé à une certaine distance, dans le sens de l'écoulement, devant l'élément chauffant (20), et un deuxième élément capteur de température étant disposé à une certaine distance, dans le sens de l'écoulement, après l'élément chauffant (20), et **en ce que** des moyens existent afin de former une valeur moyenne des signaux de capteur des deux éléments capteurs de température (21).

**10.** Compteur à gaz selon la revendication 6, **caractérisé en ce qu'**il est étalonné comme un appareil de mesure d'énergie, son étalonnage reposant sur un gaz standard, et une valeur mesurée peut être dotée d'un facteur de calibrage de valeur calorifique, qui contient au moins quasiment la valeur calorifique d'un gaz associé.

Fig. 1

Fig. 2

EP 1 227 305 B1

Fig. 3

EP 1 227 305 B1

Fig. 4a

Fig. 4b